# EUROPEAN PATENT APPLICATION

(11) **EP 4 831 605 A1**
(43) Date of publication of application: **28.10.2026**
(21) Application number: 24905444.6
(22) Date of filing: 07.06.2024
(51) Int. Cl.: G01M 17/007, B60R 16/023

(54) **AXLE CONDITION MONITORING METHOD BASED ON OIL TEMPERATURE, AND APPARATUS AND VEHICLE**

(30) Priority: 20.12.2023 CN 202311762972
(71) Applicant: Sinotruk Jinan Power Co., Ltd., Jinan, Shandong 250000 (CN)
(72) Inventor: YAN, Shufa, Jinan, Shandong 250100 (CN); KONG, Zhuo, Jinan, Shandong 250100 (CN); WEI, Jianglong, Jinan, Shandong 250100 (CN); LAN, Dongsheng, Jinan, Shandong 250000 (CN)
(74) Representative: Chung, Hoi Kan
(86) International application number: PCT/CN2024/097938
(87) International publication number: WO 2025/129941

(57) **Abstract**

Provided in this disclosure are a method and an apparatus for monitoring an axle state based on an oil temperature, and a vehicle, belonging to the field of mechanical transmission monitoring. The method includes: configuring a characteristic of temperature difference threshold between lubricating oil and an environment-average vehicle speed-average heat generation power when an axle operates normally; collecting vehicle information; based on the collected information, calculating the average heat generation power of the axle; obtaining the temperature difference threshold between the lubricating oil and the environment when the axle operates normally; collecting axle lubricating oil temperature information and environment temperature information; based on the collected axle lubricating oil temperature information and environment temperature information, calculating a temperature difference between the lubricating oil of the axle and the environment; and based on the calculated temperature difference between the lubricating oil of the electric drive axle and the environment and the obtained temperature difference threshold, judging whether the temperature difference threshold is reached, and if the temperature difference threshold is reached, temperature difference over-limit information is sent. The method assists drivers in timely maintenance planning and in shutting down for inspection when the temperature difference exceeds a limit significantly, thereby preventing severe faults such as axle failure and vehicle shutdown.

## Description

### TECHNICAL FIELD

This disclosure belongs to the field of mechanical transmission monitoring, and specifically relates to a method and an apparatus for monitoring an axle state based on an oil temperature, and a vehicle.

### BACKGROUND

The temperature of the lubricating oil is one of the main indicators reflecting the operating state of mechanical transmission apparatuses such as axles. As the vehicle operates, the temperature of the lubricating oil can reach an equilibrium state. Information regarding the equilibrium temperature of the lubricating oil reflects the operating state of the internal components within the axle. Abnormal working states such as oil overfilling, oil leakage, ablation, and wear can lead to an abnormal temperature rise of the lubricating oil. Relevant tests have revealed that, under identical working conditions, the difference between the temperature of the lubricating oil and the temperature of the environment temperature remains a constant value when the axle operates normally. Therefore, it is possible to monitor the operating state of the axle by using the temperature of the lubricating oil.

The existing general monitoring method involves setting a constant temperature threshold. Alarm information is sent when the temperature of the lubricating oil of mechanical transmission apparatuses such as axles exceeds the temperature threshold. However, the general method only considers the single factor of the temperature of the lubricating oil. For mechanical transmission apparatuses such as axles, under most of the operating working conditions, the temperature of the lubricating oil does not exceed the temperature threshold. Therefore, the phenomenon of abnormal temperature rise of the lubricating oil caused by abnormal working states such as oil overfilling, oil leakage, ablation, and wear cannot be identified.

### SUMMARY

This disclosure provides a method for monitoring an axle state based on an oil temperature. The method assists drivers in timely maintenance planning and in shutting down for inspection when the temperature difference exceeds a limit significantly, thereby preventing severe faults such as axle failure and vehicle shutdown.

The method includes:
S100: configuring a characteristic of temperature difference threshold between lubricating oil and an environment-average vehicle speed-average heat generation power when an axle operates normally;
S200: collecting average vehicle speed information of a vehicle, and average input rotating speed information and average input torque information of the axle;
S300: based on the collected average input rotating speed information and average input torque information, calculating the average heat generation power of the axle;
S400: based on the collected average vehicle speed of the vehicle and average heat generation power of the axle, obtaining the temperature difference threshold between the lubricating oil and the environment when the axle operates normally;
S500: collecting axle lubricating oil temperature information and environment temperature information;
S600: based on the collected axle lubricating oil temperature information and environment temperature information, calculating a temperature difference between the lubricating oil of the axle and the environment; and
S700: based on the calculated temperature difference between the lubricating oil of the electric drive axle and the environment and the obtained temperature difference threshold, judging whether the temperature difference threshold is reached, and if the temperature difference threshold is reached, sending temperature difference over-limit information.

Further, the average vehicle speed information of the vehicle and the average heat generation power are taken as a moving average value over an operating period of 1 hour of the axle.

Further, the characteristic of temperature difference threshold between lubricating oil and an environment-average vehicle speed-average heat generation power when the axle operates normally is represented by using the following formula: $Δ {t}_{max} = K + L ∗ v + M ∗ Q$
where in the formula, Δ*tₘₐₓ* represents the temperature difference threshold, *v* and Q represent the average vehicle speed information of the vehicle and the average heat generation power information of the axle respectively, and *K*, *L*, M represent variable coefficients.

Further, in the method, a corresponding variable coefficient is selected according to a vehicle model, so that there is a mapping relationship between the variable coefficient and the vehicle model; and
the mapping relationship between the variable coefficient and the vehicle model is as follows:
a 9-ton logistics vehicle: *K* = 58, *L* = -0.5, M = 4; and
a 18-ton sanitation vehicle: *K* = 57, *L* = -0.3, M = 1.5.

Further, the temperature difference over-limit information is determined according to a difference between the temperature difference that is between the lubricating oil of the electric drive axle and the environment and the obtained temperature difference threshold, where
when the difference ≤ 5°C, the temperature difference is normal;
when 5°C < the difference ≤ 10°C, an over-temperature early warning is sent; and
when the difference > 10°C, an over-temperature alarm is sent.

Further, the average heat generation power of the axle in the method is represented by using the following function relationship: $Q = a + b ∗ n + c ∗ T + e ∗ {n}^{2} + f ∗ n ∗ T$
where in the formula, Q represents the average heat generation power, n and T represent the average input rotating speed information and input torque information of the axle respectively, and a, b, c, e, f represent variable coefficients.

Further, the variable coefficient and the axle model further include the following mapping relationship:
a 6-ton parallel-axis axle: a = -0.07079, b = -1.828 × 10⁻⁵, c = 0.00554, e = 5.361 × 10⁻⁸, f = 1.692 × 10⁻⁶
a 12-ton parallel-axis axle: a = 0.2929, b = 3.821 × 10⁻⁵, c = 0.007719, e = 1.611 × 10⁸, f = 1.36 × 10⁻⁶.

This disclosure further provides a system for monitoring an axle state based on an oil temperature, where the system includes: a configuration module, a first collection module, a first calculation module, a second collection module, a second calculation module, a judgment module, and a sending module, where
the configuration module is configured to configure a characteristic of temperature difference threshold between lubricating oil and an environment-average vehicle speed-average heat generation power when an axle operates normally;
the first collection module is configured to collect average vehicle speed information of a vehicle and average heat generation power information of the axle;
the first calculation module is configured to obtain, based on the collected average vehicle speed information of the vehicle and average heat generation power information of the axle, the temperature difference threshold between the lubricating oil and the environment when the axle operates normally;
the second collection module is configured to collect axle lubricating oil temperature information and environment temperature information;
the second calculation module is configured to calculate, based on the collected axle lubricating oil temperature information and environment temperature information, a temperature difference between the lubricating oil of the axle and the environment;
the judgment module is configured to judge, based on the calculated temperature difference between the lubricating oil of the electric drive axle and the environment and the obtained temperature difference threshold, whether the electric drive axle reaches a preset temperature difference threshold; and
the sending module is configured to send temperature difference over-limit information.

Further, The system further includes: a two-dimensional lookup table, where
the two-dimensional lookup table is configured to select the temperature difference threshold between the lubricating oil and the environment when the axle operates normally from the two-dimensional lookup table by using the collected average vehicle speed information of the vehicle and average heat generation power information of the axle; and
the two-dimensional lookup table is further configured to select the average heat generation power of the axle from the two-dimensional lookup table by using the collected average input rotating speed information and average input torque information of the axle.

This disclosure further provides a vehicle, including a memory, a processor, and a computer program stored on the memory and executable on the processor, where the processor, when executing the program, implements the steps of the method for monitoring an axle state based on an oil temperature.

As can be seen from the above technical solutions, this disclosure has the following advantages:
The method and system for monitoring an axle state based on an oil temperature provided by this disclosure select the temperature difference between the lubricating oil of the axle and the environment as a monitoring indicator, and monitor the state by using a constant relationship between the temperature difference that is between the lubricating oil and the environment and the vehicle speed of the vehicle and the heat generation power of the axle. This disclosure dynamically monitors the axle state based on the configured characteristic of temperature difference threshold between lubricating oil and an environment-average vehicle speed-average heat generation power when the axle operates normally, which can detect the phenomenon of abnormal temperature rise of the axle in time. This disclosure assists drivers in timely maintenance planning and in shutting down for inspection when the temperature difference exceeds a limit significantly, thereby preventing severe faults such as axle failure and vehicle shutdown.

### BRIEF DESCRIPTION OF THE DRAWINGS

To describe the technical solutions of this disclosure more clearly, the following briefly introduces the accompanying drawings required for description. Apparently, the accompanying drawings in the following description show merely some embodiments of this disclosure, and those of ordinary skill in the art may still derive other accompanying drawings from these accompanying drawings without creative efforts.
FIG. 1 is a flowchart of a method for monitoring an axle state based on an oil temperature; and
FIG. 2 is a schematic diagram of a system for monitoring an axle state based on an oil temperature.

### DETAILED DESCRIPTION OF THE EMBODIMENTS

A method for monitoring an axle state based on an oil temperature provided by this disclosure may obtain and process a plurality of pieces of associated information such as vehicle speed information, rotating speed information, and average input torque based on on-board intelligent technology. The method for monitoring an axle state based on an oil temperature utilizes monitoring, extension, and expansion of a vehicle controller to intelligently sense an environment and obtain information, and uses a characteristic of temperature difference threshold-average vehicle speed-average heat generation power to calculate differences between models and parameters to obtain a phenomenon of abnormal temperature rise in an axle and provide an alarm in time.

In an embodiment of this disclosure, computer program code for performing operations of this disclosure may be written in one or more programming languages or a combination thereof. The above programming languages include but are not limited to object-oriented programming languages such as Java, Smalltalk, and C++, as well as conventional procedural programming languages such as the "C" language or similar programming languages. The program code may be executed on a vehicle completely. The problem of the inability to identify the abnormal temperature rise of the lubricating oil caused by abnormal working states such as oil overfilling, oil leakage, ablation, and wear is further effectively solved.

The method for monitoring an axle state based on an oil temperature provided by this disclosure may be applied to the vehicle, and the vehicle is not limited to a commercial vehicle and a passenger vehicle. Various controllers in the vehicle can automatically perform numerical calculation and/or information processing according to preset or prestored instructions, and hardware thereof includes but is not limited to a microprocessor, an application specific integrated circuit (ASIC), a field-programmable gate array (FPGA), a digital signal processor (DSP), an embedded device, and the like.

According to actual needs, the vehicle may be configured with a network. The network includes but is not limited to the Internet, a wide area network, a metropolitan area network, a local area network, a virtual private network (VPN), and the like, so that the vehicle may upload monitoring information to a host computer or a handheld terminal of a user, implementing a function of vehicle remote monitoring.

The following clearly and completely describes the technical solutions in the embodiments of this disclosure with reference to the accompanying drawings in the embodiments of this disclosure. Apparently, the described embodiments are merely some rather than all of the embodiments of this disclosure. Based on the embodiments in this disclosure, all other embodiments obtained by those of ordinary skill in the art without making creative efforts shall fall within the scope of protection of this disclosure.

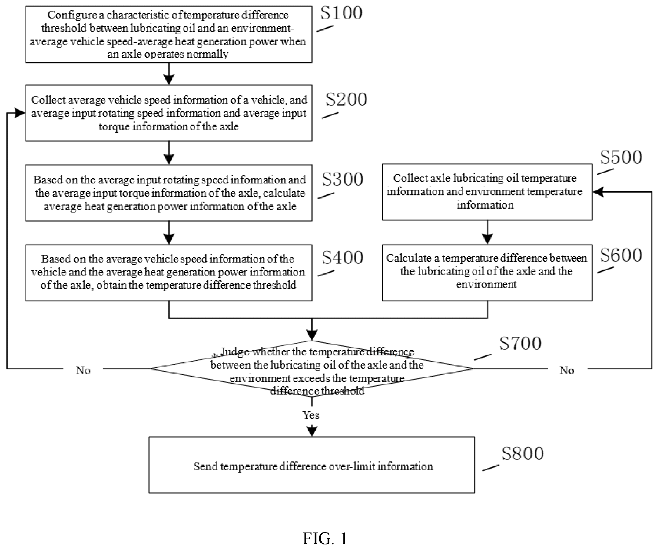

As shown in FIG. 1, an embodiment of this disclosure provides a method for monitoring an axle state based on an oil temperature, including the following steps:
S100: configuring a characteristic of temperature difference threshold between lubricating oil and an environment-average vehicle speed-average heat generation power when an axle operates normally.

During specific implementations, the temperature difference threshold may be obtained by statistically collecting difference information between a temperature of the lubricating oil and a temperature of the environment under different working conditions of average vehicle speed and heat generation power of the axle when a real vehicle is in a normal working state.

Specifically, a feasible characteristic of temperature difference threshold-average vehicle speed-average heat generation power is represented by using the following formula: $Δ {t}_{max} = K + L ∗ v + M ∗ Q$
where in the formula, Δ*tₘₐₓ* represents the temperature difference threshold, *v* and Q represent the average vehicle speed information of the vehicle and the average heat generation power information of the axle respectively, and *K, L*, M represent variable coefficients.

During specific implementations, a mapping relationship between the variable coefficient and a vehicle model is preset, and a corresponding variable coefficient is selected according to the vehicle model.

Specifically, the mapping relationship between the variable coefficient and part of the vehicle models is as follows:
a 9-ton logistics vehicle: *K* = 58, *L* = -0.5, M = 4; and
a 18-ton sanitation vehicle: *K* = 57, *L* = -0.3, M = 1.5.

For the 9-tone logistics vehicle, a formula for a characteristic of temperature difference threshold between lubricating oil and an environment-average vehicle speed-average heat generation power when an axle thereof operates normally is as follows: Δ*tₘₐₓ* = 58 - 0.5 * *v* + 4 * Q.

S200: collecting average vehicle speed information of a vehicle, and average input rotating speed information and average input torque information of the axle.

During specific implementations, the average vehicle speed information of the vehicle and the average input rotating speed and average input torque information of the axle are taken as a moving average value over an operating period of 1 hour of the axle. It should be noted that the time period length of the moving average of the above information may be appropriately adjusted according to different heat balance speeds of the vehicles.

Specifically, in this embodiment, the collected average vehicle speed of the vehicle is 60 km/h, and for the axle, the average input rotating speed is 5000 rpm, and the average input torque is 100 Nm.

S300: based on the collected average input rotating speed information and average input torque information, calculating the average heat generation power of the axle.

Specifically, a feasible average heat generation power of the axle is represented by using the following function relationship: $Q = a + b ∗ n + c ∗ T + e ∗ {n}^{2} + f ∗ n ∗ T$
where in the formula, Q represents the average heat generation power, n and T represent the average input rotating speed information and input torque information of the axle respectively, and a, b, c, e, f represent variable coefficients.

During specific implementations, a mapping relationship between the variable coefficient and an axle model is preset, and a corresponding variable coefficient is selected according to the axle model.

Specifically, the mapping relationship between the variable coefficient and part of the axle models is as follows:
a 6-ton parallel-axis axle: a = -0.07079, b = -1.828 × 10⁻⁵, c = 0.00554, e = 5.361 × 10⁻⁸, f = 1.692 × 10⁻⁶
a 12-ton parallel-axis axle: a = 0.2929, b = 3.821 × 10⁻⁵, c = 0.007719, e = 1.611 × 10⁸, f = 1.36 × 10⁻⁶

In this embodiment, the 9-ton logistics vehicle adopts the 6-ton parallel-axis axle, and a formula for calculating average heat generation power of the 6-ton parallel-axis axle is as follows: $\begin{matrix}Q = - 0.07079 - 1.828 \times {10}^{- 5} ∗ n + 0.00554 ∗ T + 5.361 \times {10}^{- 8} ∗ {n}^{2} \\ + 1.692 \times {10}^{- 6} ∗ n ∗ T\end{matrix}$

The average input rotating speed information and average input torque information collected in step S200 are substituted into the above formula to obtain the average heat generation power of the axle as 2.578 kW.

S400: based on the collected average vehicle speed information of the vehicle and average heat generation power information of the axle, obtaining the temperature difference threshold between the lubricating oil and the environment when the axle operates normally.

Specifically, the average vehicle speed information of the vehicle collected in step S200 and the average heat generation power information of the axle obtained in step S300 are substituted into the characteristic of temperature difference threshold between lubricating oil and an environment-average vehicle speed-average heat generation power configured in step S100 when the axle operates normally to obtain: Δ*tₘₐₓ* = 38.312°C.

S500: collecting axle lubricating oil temperature information and environment temperature information.

During specific implementations, the axle lubricating oil temperature information may be obtained through an oil temperature sensor arranged in an oil pool of the axle, and the environment temperature information may be obtained through a temperature sensor of the vehicle arranged at an exterior trim of the vehicle body.

Specifically, the axle lubricating oil temperature collected in this embodiment is 80°C, and the environment temperature information is 20°C.

S600: based on the collected axle lubricating oil temperature information and environment temperature information, calculating a temperature difference between the lubricating oil of the axle and the environment.

Specifically, the calculated temperature difference between the lubricating oil of the axle and the environment is 60°C.

S700: based on the calculated temperature difference between the lubricating oil of the electric drive axle and the environment and the obtained temperature difference threshold, judging whether the temperature difference threshold is reached, and if the temperature difference threshold is reached, proceeding to step S800; otherwise, proceeding to steps S200 and S500.

Specifically, the calculated temperature difference between the lubricating oil of the electric drive axle and the environment is 60°C, which is greater than the configured temperature difference threshold of 38.312°C. A difference between the temperature difference and the temperature difference threshold is 21.688°C, and proceeding to step S800 is performed.

S800: sending temperature difference over-limit information.

During specific implementations, the temperature difference over-limit information is determined according to the difference between the temperature difference that is between the lubricating oil of the electric drive axle and the environment and the obtained temperature difference threshold:
when the difference ≤ 5°C, the temperature difference is normal;
when 5°C < the difference ≤ 10°C, an over-temperature early warning is sent; and
when the difference > 10°C, an over-temperature alarm is sent.

Specifically, the difference between the temperature difference and the temperature difference threshold obtained in step S700 is 21.688°C, so that over-temperature alarm information is sent. The temperature difference over-limit information is displayed on a dashboard of the vehicle.

It should be noted that the phenomenon of the temperature difference > 10°C generally occurs when the axle is in an abnormal state. This type of abnormal state is usually caused by overfilling of the lubricating oil, leakage, abnormal wear of gear bearings, ablation, and the like.

It can be seen from this embodiment that the collected axle lubricating oil temperature is 80°C, which will not be identified as an over-temperature state under the existing over-temperature alarm technology based on a constant temperature threshold (generally 120°C). This method can dynamically define the axle lubricating oil temperature information based on an operating state of the vehicle, so that an over-temperature phenomenon can be identified.

The following is an embodiment of a system for monitoring an axle state based on an oil temperature provided by an embodiment of this disclosure. The system and the above method for monitoring an axle state based on an oil temperature of various embodiments belong to the same inventive concept. The details not described in detail in the embodiment of the system for monitoring an axle state based on an oil temperature may refer to the above embodiment of the method for monitoring an axle state based on an oil temperature.

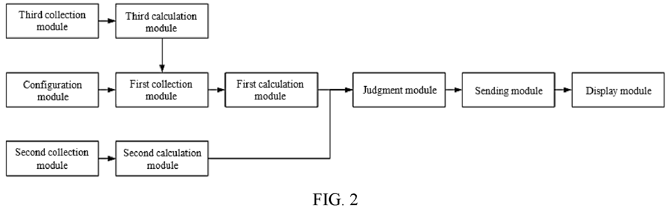

As shown in FIG. 2, the system includes: a configuration module, a first collection module, a first calculation module, a second collection module, a second calculation module, a judgment module, and a sending module.

The configuration module is configured to configure a characteristic of temperature difference threshold between lubricating oil and an environment-average vehicle speed-average heat generation power when an axle operates normally.

In this embodiment, the system further includes: a third collection module and a third calculation module.

The third collection module is configured to collect average input rotating speed information and average input torque information of the axle.

The third calculation module is configured to calculate the average heat generation power of the axle based on the collected average input rotating speed information and average input torque information. As an optional implementation, the third calculation module may be a two-dimensional lookup table. The two-dimensional lookup table is configured to select the average heat generation power of the axle from the two-dimensional lookup table by using the collected average input rotating speed information and average input torque information of the axle. For example, a feasible two-dimensional lookup table is as shown in Table 1.

**Table 1**

| | | | | | | | | | | | |
|---|---|---|---|---|---|---|---|---|---|---|---|
| Average input rotating speed | 325 | 2.19 | 3.34 | 4.19 | - | - | - | - | - | - | - |
| | 300 | 1.94 | 2.90 | 3.75 | 4.71 | - | - | - | - | - | - |
| | 275 | 1.64 | 2.54 | 3.41 | 4.26 | - | - | - | - | - | - |
| | 250 | 1.50 | 2.38 | 3.12 | 3.94 | - | - | - | - | - | - |
| /Nm | 225 | 1.25 | 2.26 | 2.77 | 3.60 | 4.42 | - | - | - | - | - |
| | 200 | 1.09 | 1.91 | 2.49 | 3.25 | 3.95 | 4.98 | - | - | - | - |
| | 175 | 0.99 | 1.61 | 2.18 | 2.93 | 3.67 | 4.46 | 5.62 | - | - | - |
| | 150 | 0.81 | 1.36 | 1.97 | 2.67 | 3.35 | 3.95 | 4.98 | 6.18 | - | - |
| | 125 | 0.65 | 1.15 | 1.74 | 2.39 | 2.95 | 3.55 | 4.46 | 5.54 | 7.90 | - |
| | 100 | 0.52 | 0.97 | 1.52 | 2.13 | 2.65 | 3.14 | 4.02 | 4.87 | 6.82 | 8.71 |
| | 75 | 0.41 | 0.80 | 1.28 | 1.89 | 2.33 | 2.81 | 3.55 | 4.44 | 6.05 | 7.66 |
| | 50 | 0.31 | 0.64 | 1.09 | 1.63 | 2.02 | 2.47 | 3.11 | 4.01 | 5.33 | 6.69 |
| | 25 | 0.22 | 0.50 | 0.90 | 1.42 | 1.85 | 2.23 | 2.63 | 3.65 | 4.89 | 6.61 |
| | | 1000 | 2000 | 3000 | 4000 | 5000 | 6000 | 7000 | 8000 | 9000 | 10000 |
| | | Average input rotating speed (r/min) | | | | | | | | | |

The first collection module is configured to collect average vehicle speed information of a vehicle and average heat generation power information of the axle.

The first calculation module is configured to obtain, based on the collected average vehicle speed information of the vehicle and average heat generation power information of the axle, the temperature difference threshold between the lubricating oil and the environment when the axle operates normally.
As an optional implementation, the first calculation module may be a two-dimensional lookup table. The two-dimensional lookup table is configured to select the temperature difference threshold between the lubricating oil and the environment when the axle operates normally from the two-dimensional lookup table by using the average vehicle speed information of the vehicle and the average heat generation power information of the axle. For example, a feasible two-dimensional lookup table is as shown in Table 2.

| | | Average vehicle speed of a vehicle (km/h) | | | | | | | | | | | |
|---|---|---|---|---|---|---|---|---|---|---|---|---|---|
| | | 10 | 20 | 30 | 40 | 50 | 60 | 70 | 80 | 90 | 100 | 110 | 120 |
| | 1 | 57°C | 52°C | 47°C | 42°C | 37°C | 32°C | 27°C | 22°C | 17°C | 12°C | 7°C | 2°C |
| Average heat generation power of an axle /kW | 2 | 61°C | 56°C | 51°C | 46°C | 41°C | 36°C | 31°C | 26°C | 21°C | 16°C | 11°C | 6°C |
| | 3 | 65°C | 60°C | 55°C | 50°C | 45°C | 40°C | 35°C | 30°C | 25°C | 20°C | 15°C | 10°C |
| | 4 | 69°C | 64°C | 59°C | 54°C | 49°C | 44°C | 39°C | 34°C | 29°C | 24°C | 19°C | 14°C |
| | 5 | 73°C | 68°C | 63°C | 58°C | 53°C | 48°C | 43°C | 38°C | 33°C | 28°C | 23°C | 18°C |
| | 6 | 77°C | 72°C | 67°C | 62°C | 57°C | 52°C | 47°C | 42°C | 37°C | 32°C | 27°C | 22°C |
| | 7 | 81°C | 76°C | 71°C | 66°C | 61°C | 56°C | 51°C | 46°C | 41°C | 36°C | 31°C | 26°C |
| | 8 | 85°C | 80°C | 75°C | 70°C | 65°C | 60°C | 55°C | 50°C | 45°C | 40°C | 35°C | 30°C |

The second collection module is configured to collect axle lubricating oil temperature information and environment temperature information.

The second calculation module is configured to calculate, based on the collected axle lubricating oil temperature information and environment temperature information, a temperature difference between the lubricating oil of the axle and the environment.

The judgment module is configured to judge, based on the calculated temperature difference between the lubricating oil of the electric drive axle and the environment and the obtained temperature difference threshold, whether the electric drive axle reaches a preset temperature difference threshold.

The sending module is configured to send temperature difference over-limit information to a control system of the vehicle.

A display module is configured to display the temperature difference over-limit information on a dashboard of the vehicle.

Based on the above system, the difference between the temperature of the lubricating oil of the axle and the temperature of the environment is used as a monitoring indicator, and the temperature difference threshold based on the average vehicle speed and average heat generation power of the vehicle is provided, thereby providing a basis for monitoring the axle state. Compared with a traditional monitoring method based on a constant temperature threshold, the temperature can be dynamically monitored according to the working conditions of the vehicle, so that the phenomenon of over-temperature can be identified more reasonably. Severe faults such as axle failure and vehicle shutdown are avoided.

The method and system for monitoring an axle state based on an oil temperature provided by this disclosure are combined with units and algorithm steps of the examples described in the embodiments disclosed in the specification, which can be implemented by electronic hardware, computer software, or a combination thereof. To clearly describe the interchangeability between hardware and software, the foregoing generally describes compositions and steps of the examples based on functions. Whether the functions are performed in a manner of hardware or software depends on particular applications and design constraints of the technical solutions. Those skilled in the art may use different methods to implement the described functions for each specific application, but such implementation should not be considered to be beyond the scope of this disclosure.

The terms "first", "second", "third", "fourth", and so on (if any) in the specification and claims of this disclosure and in the above accompanying drawings are intended to distinguish between similar objects but do not necessarily indicate a specific order or sequence. It should be understood that the data used in this way can be interchanged where appropriate so that the embodiments of this disclosure described herein may be implemented in an order other than those illustrated or described herein. In addition, the terms "including", "having", or any other variant thereof are intended for covering non-exclusive inclusions.

The above description of the disclosed embodiments enables those skilled in the art to implement or use this disclosure. Various modifications to these embodiments will be readily apparent to those skilled in the art, and the generic principles defined herein may be implemented in other embodiments without departing from the spirit or scope of this disclosure. Therefore, this disclosure is not intended to be limited to the embodiments shown herein, but is to be in accordance with the widest scope consistent with the principles and novel features disclosed herein.

## Claims

1. A method for monitoring an axle state based on an oil temperature, wherein the method comprises:
S100: configuring a characteristic of temperature difference threshold between lubricating oil and an environment-average vehicle speed-average heat generation power when an axle operates normally;
S200: collecting average vehicle speed information of a vehicle, and average input rotating speed information and average input torque information of the axle;
S300: based on the collected average input rotating speed information and average input torque information, calculating the average heat generation power of the axle;
S400: based on the collected average vehicle speed of the vehicle and average heat generation power of the axle, obtaining the temperature difference threshold between the lubricating oil and the environment when the axle operates normally;
S500: collecting axle lubricating oil temperature information and environment temperature information;
S600: based on the collected axle lubricating oil temperature information and environment temperature information, calculating a temperature difference between the lubricating oil of the axle and the environment; and
S700: based on the calculated temperature difference between the lubricating oil of the electric drive axle and the environment and the obtained temperature difference threshold, judging whether the temperature difference threshold is reached, and if the temperature difference threshold is reached, sending temperature difference over-limit information.

2. The method for monitoring an axle state based on an oil temperature according to claim 1, wherein
the average vehicle speed information of the vehicle and the average heat generation power are taken as a moving average value over an operating period of 1 hour of the axle.

3. The method for monitoring an axle state based on an oil temperature according to claim 1, wherein
the characteristic of temperature difference threshold between lubricating oil and an environment-average vehicle speed-average heat generation power when the axle operates normally is represented by using the following formula: $Δ {t}_{max} = K + L ∗ v + M ∗ Q$
wherein in the formula, Δ*tₘₐₓ* represents the temperature difference threshold, *v* and Q represent the average vehicle speed information of the vehicle and the average heat generation power information of the axle respectively, and *K*, *L*, M represent variable coefficients.

4. The method for monitoring an axle state based on an oil temperature according to claim 3, wherein
in the method, a corresponding variable coefficient is selected according to a vehicle model, so that there is a mapping relationship between the variable coefficient and the vehicle model; and
the mapping relationship between the variable coefficient and the vehicle model is as follows:
a 9-ton logistics vehicle: *K* = 58, *L* = -0.5, M = 4; and
a 18-ton sanitation vehicle: *K* = 57, *L* = -0.3, M = 1.5.

5. The method for monitoring an axle state based on an oil temperature according to claim 1 or 2, wherein
the temperature difference over-limit information is determined according to a difference between the temperature difference that is between the lubricating oil of the electric drive axle and the environment and the obtained temperature difference threshold, wherein
when the difference ≤ 5°C, the temperature difference is normal;
when 5°C < the difference ≤ 10°C, an over-temperature early warning is sent; and
when the difference > 10°C, an over-temperature alarm is sent.

6. The method for monitoring an axle state based on an oil temperature according to claim 1 or 2, wherein the average heat generation power of the axle in the method is represented by using the following function relationship: $Q = a + b ∗ n + c ∗ T + e ∗ {n}^{2} + f ∗ n ∗ T$ wherein in the formula, Q represents the average heat generation power, n and T represent the average input rotating speed information and input torque information of the axle respectively, and a, b, c, e, f represent variable coefficients.

7. The method for monitoring an axle state based on an oil temperature according to claim 4, wherein
the variable coefficient and an axle model further comprise the following mapping relationship:
a 6-ton parallel-axis axle: a = -0.07079, b = -1.828 × 10⁻⁵, c = 0.00554,
e = 5.361 × 10⁻⁸, f = 1.692 × 10⁻⁶
a 12-ton parallel-axis axle: a = 0.2929, b = 3.821 × 10⁻⁵, c = 0.007719,
e = 1.611 × 10⁸, f = 1.36 × 10⁻⁶.

8. A system for monitoring an axle state based on an oil temperature, wherein the system adopts the method for monitoring an axle state based on an oil temperature according to any one of claims 1 to 7; and the system comprises: a configuration module, a first collection module, a first calculation module, a second collection module, a second calculation module, a judgment module, and a sending module, wherein
the configuration module is configured to configure a characteristic of temperature difference threshold between lubricating oil and an environment-average vehicle speed-average heat generation power when an axle operates normally;
the first collection module is configured to collect average vehicle speed information of a vehicle and average heat generation power information of the axle;
the first calculation module is configured to obtain, based on the collected average vehicle speed information of the vehicle and average heat generation power information of the axle, the temperature difference threshold between the lubricating oil and the environment when the axle operates normally;
the second collection module is configured to collect axle lubricating oil temperature information and environment temperature information;
the second calculation module is configured to calculate, based on the collected axle lubricating oil temperature information and environment temperature information, a temperature difference between the lubricating oil of the axle and the environment;
the judgment module is configured to judge, based on the calculated temperature difference between the lubricating oil of the electric drive axle and the environment and the obtained temperature difference threshold, whether the electric drive axle reaches a preset temperature difference threshold; and
the sending module is configured to send temperature difference over-limit information.

9. The system for monitoring an axle state based on an oil temperature according to claim 8,
further comprising: a two-dimensional lookup table, wherein
the two-dimensional lookup table is configured to select the temperature difference threshold between the lubricating oil and the environment when the axle operates normally from the two-dimensional lookup table by using the collected average vehicle speed information of the vehicle and average heat generation power information of the axle; and
the two-dimensional lookup table is further configured to select the average heat generation power of the axle from the two-dimensional lookup table by using the collected average input rotating speed information and average input torque information of the axle.

10. A vehicle, comprising a memory, a processor, and a computer program stored on the memory and executable on the processor, wherein the processor, when executing the program, implements the steps of the method for monitoring an axle state based on an oil temperature according to any one of claims 1 to 7.
